# EUROPEAN PATENT APPLICATION

(11) **EP 4 786 059 A1**
(43) Date of publication of application: **05.08.2026**
(21) Application number: 24872526.9
(22) Date of filing: 27.09.2024
(51) Int. Cl.: B05D 7/24, B05D 1/18, B05D 1/36, B05D 7/00, C09D 5/25, C09D 7/61, C09D 183/04, H01B 3/46, H01B 7/02, H01M 50/522, H01M 50/524, H01M 50/526

(54) **METHOD FOR PRODUCING COMPOSITE MEMBER**

(30) Priority: 29.09.2023 JP 2023170684
(71) Applicant: IBIDEN CO., LTD., Ogaki-shi, Gifu 503-8604 (JP)
(72) Inventor: GOTO, Shinnosuke, Gifu, 5010695 (JP); USHIDA, Takeshi, Gifu, 5010695 (JP)
(74) Representative: Hoffmann Eitle
(86) International application number: PCT/JP2024/034704
(87) International publication number: WO 2025/070745

(57) **Abstract**

To provide a method for producing a composite member, which does not require an operation of winding a tape or the like and which enables easy formation of an insulating film that has no problems with winding unevenness, a gap, or peeling off, that has a sufficient strength for a substrate having a complicated shape, that is in close contact with the substrate without peeling off even in the case of being heated at a high temperature, and that has an excellent insulating property and heat resistance. A method for producing a composite member (1) including a substrate (2) and an insulating film (3) covering at least a part of a surface of the substrate (2) includes: an application step of applying a first coating material containing an inorganic material (20) and a material of a matrix (10) containing a compound having a siloxane bond to at least the part of the surface of the substrate (2); and a first coating material curing step of curing the first coating material, in which the insulating film including a first layer (11) and a second layer (12) is formed by repeating at least the application step a plurality of times.

## Description

### TECHNICAL FIELD

The present invention relates to a method for producing a composite member in which a substrate is covered with an insulating film.

### BACKGROUND ART

In order to electrically connect components, a conductive member in which an insulating film is formed on a surface of a metal piece is used. For example, various electronic devices, electric vehicles or hybrid vehicles driven by an electric motor, storage batteries, and the like are mounted with a power storage device in which a plurality of battery cells are connected in series or in parallel by a bus bar, which is a conductive member. In addition, a lithium ion secondary battery, which has higher capacity and is capable of higher output than a lead-acid battery, a nickel-metal hydride battery, or the like, is mainly used for the battery cells.

In the battery cell, an overcurrent is applied during charging and discharging, and the bus bar may generate heat, and in some cases, a flame may be generated. Therefore, the bus bar is required to have an insulating property and heat resistance. For example, Patent Literature 1 describes a bus bar in which a ceramic tape such as a mica tape is wound as a refractory layer around a copper bus bar body.

### CITATION LIST

### PATENT LITERATURE

Patent Literature 1: CN216902355U1

### SUMMARY OF INVENTION

### TECHNICAL PROBLEM

However, in Patent Literature 1, an operation of winding the ceramic tape around the bus bar body is required. The bus bar may have a complicated shape due to a spatial limitation of an installation location of the battery cell, and when the bus bar has a complicated shape, it is difficult to wind the ceramic tape around every corner of the bus bar body. When the ceramic tape has winding unevenness or a gap, no sufficient insulating property and heat resistance can be obtained. It is also assumed that an adhesive surface of the ceramic tape is peeled off. Further, although a nylon tape is wound as an insulation layer on an outer side of the mica tape, the nylon tape is weak against heat and has a problem in heat resistance.

Therefore, an object of the present invention is to provide a method for producing a composite member, which does not require a winding operation such as that for a ceramic tape and which enables easy formation of an insulating film that has no problems with winding unevenness, a gap, or peeling off, that has a sufficient strength for a substrate having a complicated shape, that is in close contact with the substrate without peeling off even in the case of being heated at a high temperature, and that has an excellent insulating property and heat resistance.

### SOLUTION TO PROBLEM

The above object of the present invention is achieved by the following configuration [1] relating to a method for producing a composite member.
[1] A method for producing a composite member including a substrate and an insulating film covering at least a part of a surface of the substrate, the method including:
   an application step of applying a first coating material containing an inorganic material and a matrix material containing a compound having a siloxane bond to at least the part of the surface of the substrate; and
   a first coating material curing step of curing the first coating material, in which
   at least the application step is repeated a plurality of times.
   In addition, preferred embodiments of the present invention relating to the method for producing a composite member relate to the following [2] to [22].
[2] The method for producing a composite member according to [1], in which the application step and the first coating material curing step are repeated a plurality of times in this order.
[3] The method for producing a composite member according to [2], wherein the first coating material is applied to the substrate by immersing the substrate in the first coating material in at least the final application step among the application step and the first coating material curing step repeated the plurality of times.
[4] The method for producing a composite member according to [2], further including:
   after the first coating material curing step, a second coating material immersion step of immersing the substrate on which a film of the first coating material has been formed in a second coating material consisting of a matrix material containing a compound having a siloxane bond; and
   a second coating material curing step of curing the second coating material.
[5] The method for producing a composite member according to [4], further including:
   a second coating material drying step of drying the second coating material between the second coating material immersion step and the second coating material curing step.
[6] The method for producing a composite member according to [1], further including:
   a first coating material drying step of drying the first coating material after the application step, in which
   the application step and the first coating material drying step are repeated a plurality of times in this order before the first coating material curing step.
[7] The method for producing a composite member according to [2], further including:
   a first coating material drying step of drying the first coating material between the application step and the first coating material curing step, in which
   the application step, the first coating material drying step, and the first coating material curing step are repeated a plurality of times in this order.
[8] The method for producing a composite member according to [7], in which a thickness of a layer formed by performing the application step, the first coating material drying step, and the first coating material curing step once each is 50 µm or more and 400 µm or less.
[9] The method for producing a composite member according to [2], further including:
   after the first coating material curing step, an immersion step of immersing the substrate on which a film of the first coating material is formed in a second coating material consisting of a matrix material containing a compound having a siloxane bond, and a second coating material curing step of curing the second coating material, in which
   the application step, the first coating material curing step, the immersion step, and the second coating material curing step are repeated a plurality of times in this order.
[10] The method for producing a composite member according to [9], further including:
   a first coating material drying step of drying the first coating material between the application step and the first coating material curing step; and
   a second coating material drying step of drying the second coating material between the immersion step and the second coating material curing step.
[11] The method for producing a composite member according to [10], in which a thickness of a layer formed by performing the steps from the application step to the second coating material curing step once each is 50 µm or more and 400 µm or less.
[12] The method for producing a composite member according to any one of [1] to [11], in which the insulating film is formed to have a thickness of 150 µm or more and 800 µm or less.
[13] The method for producing a composite member according to any one of [1] to [12], further including:
   a resin layer forming step of forming a resin layer by applying a resin material containing a resin different from the matrix material to at least a part of a surface and curing the resin material.
[14] The method for producing a composite member according to any one of [1] to [13], further including:
   before the application step, a blasting treatment step of subjecting the substrate to a blasting treatment such that a surface roughness Ra is 1 µm or more.
[15] The method for producing a composite member according to any one of [1] to [3] and [6] to [8], in which the compound having a siloxane bond contained in the first coating material is at least one of silicone and silica sol.
[16] The method for producing a composite member according to any one of [4], [5], and [9] to [11], in which the compound having a siloxane bond contained in each of the first coating material and the second coating material is at least one of silicone and silica sol.
[17] The method for producing a composite member according to any one of [1] to [16], in which the inorganic material includes at least one kind selected from silica, alumina, mullite, and zirconia.
[18] The method for producing a composite member according to any one of [1] to [16], in which the inorganic material includes at least one kind selected from a glass-based material, mica, kaolin, talc, clay, pyrophyllite, montmorillonite, bentonite, wollastonite, xonotlite, zeolite, diatomaceous earth, and halloysite.
[19] The method for producing a composite member according to any one of [1] to [18], in which the inorganic material includes at least one kind selected from a flaky inorganic material, a fibrous inorganic material, and a particulate inorganic material.
[20] The method for producing a composite member according to any one of [1] to [13], in which the inorganic material includes at least one of a flaky glass-based material and mica.
[21] The method for producing a composite member according to any one of [1] to [20], in which the composite member is applied to a bus bar that connects a plurality of battery cells or battery modules.
[22] The method for producing a composite member according to any one of [1] to [20], in which the composite member is applied to a connector, a protective component for a battery module, a case of an electronic component, a battery cell, a battery module, a battery pack, or a coil of a motor.

### ADVANTAGEOUS EFFECTS OF INVENTION

In the method for producing a composite member according to the present invention, since the insulating film is formed on at least a part of the surface of the substrate by an application method using a coating material, an operation of winding a tape or the like is not required and it is possible to form an insulating film that has no problems with winding unevenness, a gap, or peeling off, and that has a sufficient strength for a substrate having a complicated shape. In addition, in the method for producing a composite member according to the present invention, since the application step is repeated a plurality of times to obtain a desired thickness, it is possible to easily form an insulating film in close contact with the substrate without peeling off even in the case of being heated at a high temperature, and having an excellent insulating property and heat resistance.

### BRIEF DESCRIPTION OF DRAWINGS

[Fig. 1A] Fig. 1A is a diagram showing a method for producing a composite member according to a first embodiment of the present invention in order of steps, and is a schematic diagram showing an application step for the first time.
[Fig. 1B] Fig. 1B is a diagram showing the method for producing a composite member according to the first embodiment of the present invention in order of steps, and is a schematic diagram showing an application step for the second time.
[Fig. 1C] Fig. 1C is a diagram showing the method for producing a composite member according to the first embodiment of the present invention in order of steps, and is a schematic diagram showing a first coating material curing step.
[Fig. 1D] Fig. 1D is a diagram showing the method for producing a composite member according to the first embodiment of the present invention in order of steps, and is a schematic diagram showing a second coating material immersion step.
[Fig. 1E] Fig. 1E is a diagram showing the method for producing a composite member according to the first embodiment of the present invention in order of steps, and is a schematic diagram showing a resin layer forming step.
[Fig. 2A] Fig. 2A is a diagram showing a method for producing a composite member according to a second embodiment of the present invention in order of steps, and is a schematic diagram showing an application step for the first time.
[Fig. 2B] Fig. 2B is a diagram showing the method for producing a composite member according to the second embodiment of the present invention in order of steps, and is a schematic diagram showing a first coating material curing step for the first time.
[Fig. 2C] Fig. 2C is a diagram showing the method for producing a composite member according to the second embodiment of the present invention in order of steps, and is a schematic diagram showing a first coating material immersion step.
[Fig. 2D] Fig. 2D is a diagram showing the method for producing a composite member according to the second embodiment of the present invention in order of steps, and is a schematic diagram showing a first coating material curing step for the second time.
[Fig. 2E] Fig. 2E is a diagram showing the method for producing a composite member according to the second embodiment of the present invention in order of steps, and is a schematic diagram showing a second coating material immersion step.
[Fig. 2F] Fig. 2F is a diagram showing the method for producing a composite member according to the second embodiment of the present invention in order of steps, and is a schematic diagram showing a resin layer forming step.
[Fig. 3A] Fig. 3A is a diagram showing a method for producing a composite member according to a third embodiment of the present invention in order of steps, and is a schematic diagram showing an application step for the first time.
[Fig. 3B] Fig. 3B is a diagram showing the method for producing a composite member according to the third embodiment of the present invention in order of steps, and is a schematic diagram showing a first coating material curing step for the first time.
[Fig. 3C] Fig. 3C is a diagram showing the method for producing a composite member according to the third embodiment of the present invention in order of steps, and is a schematic diagram showing a second coating material immersion step for the first time.
[Fig. 3D] Fig. 3D is a diagram showing the method for producing a composite member according to the third embodiment of the present invention in order of steps, and is a schematic diagram showing an immersion step for the second time.
[Fig. 3E] Fig. 3E is a diagram showing the method for producing a composite member according to the third embodiment of the present invention in order of steps, and is a schematic diagram showing a first coating material curing step for the second time.
[Fig. 3F] Fig. 3F is a diagram showing the method for producing a composite member according to the third embodiment of the present invention in order of steps, and is a schematic diagram showing a second coating material immersion step for the second time.
[Fig. 3G] Fig. 3G is a diagram showing the method for producing a composite member according to the third embodiment of the present invention in order of steps, and is a schematic diagram showing a resin layer forming step.
[Fig. 4] Fig. 4 is a photograph substituted for a drawing showing an example of a composite member obtained by the method for producing a composite member according to the third embodiment.
[Fig. 5] Fig. 5 is a photograph substituted for a drawing showing another example of the composite member obtained by the method for producing a composite member according to the third embodiment.
[Fig. 6] Fig. 6 is a perspective view showing a bus bar produced by the method for producing a composite member according to the embodiment of the present invention.

### DESCRIPTION OF EMBODIMENTS

The present inventors have conducted intensive studies to obtain a composite member capable of solving the above problems without using an insulating tape such as a ceramic tape. As a result, the present inventors have found that a composite film can be easily produced even in the case where a substrate having a complicated shape is used by a method of applying a material of an insulating film to a surface of the substrate and coating the surface of the substrate with the insulating film.

In addition, as a result of intensive studies for obtaining an insulating film having a sufficient strength, the present inventors have found that it is effective to form an insulating film having a desired thickness by repeating a step of applying a first coating material containing an inorganic material and a matrix containing a compound having a siloxane bond to a substrate.

Note that, examples of the compound having a siloxane bond (Si-O-Si bond) include silicone and silica sol (silica: SiO₂). From the viewpoint of excellent heat resistance and insulating property, the compound having a siloxane bond contained in each of a first coating material and a second coating material to be described below is preferably at least one of silicone and silica sol, and more preferably silicone. It is also preferable that each of the first coating material and the second coating material contains both silicone and silica sol.

Hereinafter, embodiments of the present invention will be described in detail with reference to the drawings. Note that, the present invention is not limited to the embodiments described below, and can be freely changed and implemented without departing from the gist of the present invention.

### [Method for Producing Composite Member]

### [First Embodiment]

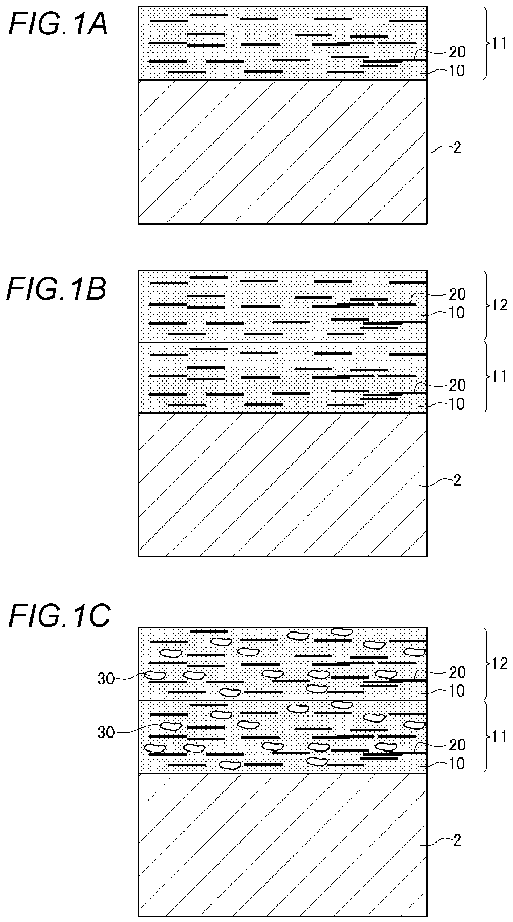

Figs. 1A to 1E are schematic diagrams showing a method for producing a composite member according to a first embodiment of the present invention in order of steps. Note that, in the following production method, a case where the compound having a siloxane bond contained in each of the first coating material and the second coating material is silicone will be described, and a case where the compound having a siloxane bond is silica sol (silica) can be similarly applied.

### <Formation of First Layer>

### (application step: First Time)

As shown in Fig. 1A, first, at least a part of a surface of a substrate 2 is coated with the first coating material. The first coating material is, for example, a material obtained by adding a material of a matrix 10 containing silicone (compound having a siloxane bond) and an inorganic material 20 to an organic solvent, and details thereof will be described later.

### (First Coating Material Drying Step: First Time)

After the application step, the first coating material is dried at a temperature of 50°C, for example. In the first coating material drying step, the organic solvent is volatilized to form a first layer 11.

### <Formation of Second Layer>

### (application step: Second Time)

Thereafter, as shown in Fig. 1B, the first coating material is stacked again on a surface of the first layer 11. This first coating material is the same material as that used in the application step for the first time.

### (First Coating Material Drying Step: Second Time)

After the application step for the second time, the first coating material is dried at a temperature of 50°C, for example. With the first coating material drying step for the second time, the organic solvent in the first coating material for coating in the application step for the second time is volatilized to form a second layer 12.

### (First coating material Curing Step)

Thereafter, as shown in Fig. 1C, the first layer 11 and the second layer 12 composed of the dried first coating material are heated at a temperature of, for example, 200°C to be cured. With the first coating material curing step, the silicone is dehydrated and condensed to form a three-dimensional network structure. With the first coating material curing step, a large number of pores 30 are formed in the first layer 11 and the second layer 12.

### <Formation of Third Layer (Surface Layer)>

### (Second Coating Material Immersion Step)

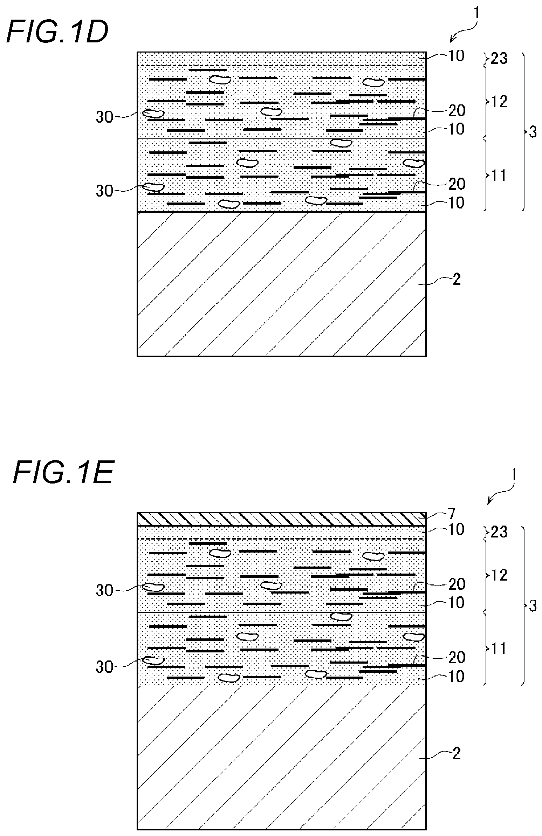

Thereafter, as shown in Fig. 1D, the substrate 2 on which the first layer 11 and the second layer 12 has been formed is immersed in the second coating material. The second coating material does not contain the inorganic material 20 and is obtained by adding the material of the matrix 10 containing silicone (compound having a siloxane bond) to an organic solvent. With the second coating material immersion step, some of the large number of pores 30 formed in the first layer 11 and the second layer 12 are filled with the second coating material, and a porosity of the first layer 11 and the second layer 12 is reduced. In addition, the excess second coating material that has not been absorbed by the pores 30 remains on a surface of the second layer 12.

### (Second Coating Material Drying Step and Curing Step)

Thereafter, the second coating material is dried at a temperature of, for example, 50°C and then heated at a temperature of, for example, 200°C to be cured. Accordingly, a third layer 23 consisting of the material of the matrix 10 containing silicone is formed on the surface of the second layer 12, and a composite member 1 including an insulating film 3 composed of the first layer 11, the second layer 12, and the third layer 23 is obtained. In the present invention, the second coating material may be cured without drying, but by performing the drying step, expansion of the obtained layer in the curing step can be suppressed. Therefore, the drying step is preferably performed.

### (Resin Layer Forming Step)

In the present embodiment, a resin layer may be formed as necessary. As shown in Fig. 1E, a resin layer 7 may be formed by coating a surface of the third layer 23, that is, a surface of the insulating film 3, with a resin material containing a resin different from the material of the matrix 10, for example, an epoxy resin coating material, and drying and curing the resin material, whereby the composite member 1 including the insulating film 3 and the resin layer 7 on the substrate 2 is formed. In the case of forming the resin layer 7, a part of the material constituting the resin layer 7 may penetrate the first layer 11, the second layer 12, and the third layer 23.

With the method for producing a composite member according to the first embodiment, an insulating property is not imparted by winding a tape around the substrate 2, but the surface of the substrate 2 is coated with the material of the insulating film to form the insulating film 3 in close contact with the substrate 2. Therefore, during the production of the composite member 1 according to the present embodiment, a winding operation is not required and it is possible to easily form the insulating film 3 that has no problems with winding unevenness, a gap, or peeling off even under a complicated shape. In addition, the first layer 11 and the second layer 12 constituting the insulating film 3 contain the matrix 10 containing silicone and the inorganic material 20. The silicone contained in the matrix material is heated in the coating material curing step in the production method according to the embodiment of the present invention, whereby functional groups disappear and a SiO bond is generated. In addition, when a flame or the like is generated near the composite member and the insulating film 3 is heated to a temperature of, for example, 700°C or higher, SiO₂ is generated by thermal decomposition. Then, since SiO₂ is not burned out even when subjected to a flame, the insulating film 3 containing silicone can have excellent heat resistance. In addition, since the inorganic material 20 has a high melting point and excellent heat resistance, the heat resistance of the entire insulating film 3 can be improved by containing the inorganic material 20 in the first layer 11 and the second layer 12 constituting the insulating film 3.

Further, according to the present embodiment, since the application step using the first coating material is repeatedly performed, the insulating film 3 can be formed to a desired thickness. By applying the first coating material to the surface a plurality of times to increase the thickness, it is possible to easily form an insulating film that has a sufficient strength, that is in close contact with the substrate without peeling off even in the case of being heated at a high temperature, and that has an excellent insulating property and heat resistance. Note that, the first layer 11 and the second layer 12 after the first coating material curing step shown in Fig. 1C is performed may be used as the insulating film 3. When only the first coating material is repeatedly applied, coating or immersion can be used as the method for applying the first coating material. However, in the final application step among the repeated application steps, it is preferable to immerse the substrate on which the coating film has been formed in the first coating material. Accordingly, it is possible to efficiently fill, with the material of the matrix 10, the pores 30 inside the layer formed of the first coating material.

Note that, in the first embodiment, in the second coating material immersion step, the second coating material that does not contain the inorganic material 20 in the first coating material is used. Since the second coating material contains silicone, the amount of silicone in the first layer 11 and the second layer 12 is increased by the second coating material immersion step, SiO₂ is also increased, and the heat resistance can be more effectively maintained in the case where a flame is received.

In addition, in the present embodiment, in the second coating material immersion step, the excess second coating material that has not been absorbed by the pores 30 remains on the surface of the second layer 12 to form the third layer 23. Unlike the first layer 11 and the second layer 12, the third layer 23 does not contain the inorganic material 20, and contains only the material of the matrix 10. Therefore, the third layer 23 has high adhesion to the second layer 12 and is harder and denser than the first layer 11 and the second layer 12, and thus can have an effect of protecting the surfaces of the first layer 11 and the second layer 12. Therefore, when the third layer 23 is formed on at least a part of the surface, it is possible to suppress damage to the surface of the second layer 12 and to alleviate an impact from a collision object. In addition, since the third layer 23 is formed, it is possible to obtain an effect of preventing powder falling of the inorganic material 20 or the like.

However, in the present invention, the third layer 23 does not necessarily have to be formed. Depending on immersion conditions and the like in the second coating material immersion step, the excess second coating material may be configured not to be present on the surface of the second layer 12. In this case, the third layer 23 shown in Fig. 1D is not formed, and the resin layer 7 is formed on the second layer 12. In the present invention, the resin layer 7 does not necessarily have to be formed. In this manner, according to the present embodiment, it is possible to easily produce a composite film including the insulating film 3 having excellent heat resistance and insulating property even in the case where the third layer 23 and the resin layer 7 are not formed.

Further, in the first embodiment described above, the series of the application step and the first coating material drying step is repeated twice, but may be repeated a plurality of times until a desired thickness is obtained. By repeating the series of steps twice or more, the insulating film 3 can have a desired thickness, and the heat resistance and the insulating property can be further improved.

In addition, in the production method according to the first embodiment described above, the first coating material (coating liquid) is obtained by adding the material of the matrix 10 containing silicone and the inorganic material 20 to the organic solvent, and the second coating material (coating liquid) does not contain the inorganic material 20 and is obtained by adding the material of the matrix 10 containing silicone to the organic solvent, but the composite member according to the present invention can be obtained without performing the immersion step depending on the kinds of the first coating material and the second coating material, for example, in the case of silica sol (silica). The same applies to production methods according to a second embodiment and a third embodiment to be described later.

### [Second Embodiment]

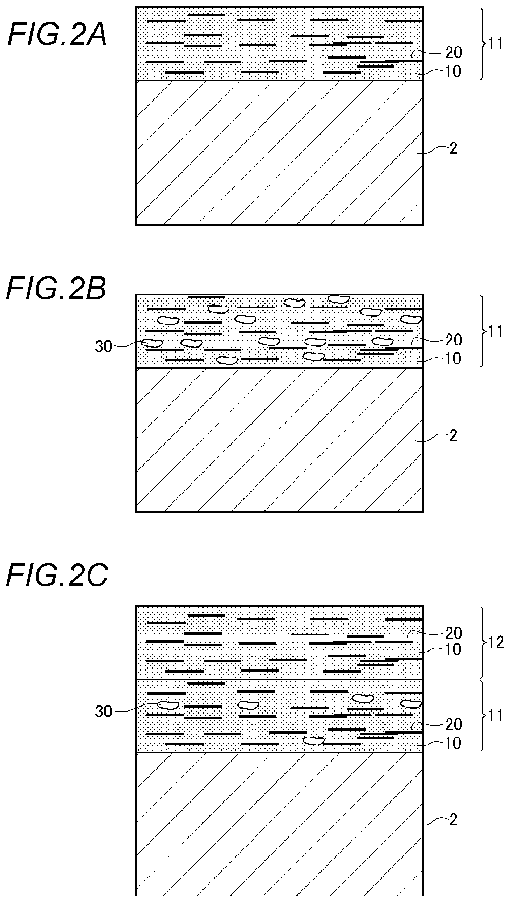

Figs. 2A to 2F are schematic diagrams showing a method for producing a composite member according to the second embodiment of the present invention in order of steps. In Figs. 2A to 2F, the same components as those shown in Figs. 1A to 1E are denoted by the same reference numerals, and detailed description thereof will be omitted or simplified.

### <Formation of First Layer>

### (application step: First Time)

As shown in Fig. 2A, first, at least a part of the surface of the substrate 2 is coated with the first coating material. The first coating material is similar to that in the first embodiment, and details thereof will be described later.

### (First coating material Drying Step and Curing Step: First Time)

Next, as shown in Fig. 2B, the first coating material is dried at a temperature of, for example, 50°C (first coating material drying step), and then heated at a temperature of, for example, 200°C to be cured (first coating material curing step). With this step, the first layer 11 having a large number of pores 30 is formed.

Note that, in the present embodiment, the thickness of the first layer 11 formed by performing the application step, the first coating material drying step, and the first coating material curing step once each is not particularly limited. For example, when coating the surface of the substrate with the first coating material, the thickness is preferably a thickness that can be easily formed by coating once, and thus the thickness is preferably 50 µm or more, and more preferably 100 µm or more. On the other hand, when the thickness of the first layer 11 is too large, it is difficult to sufficiently fill a part of the pores 30 formed in the first layer 11 with the material of the matrix 10 in the step of forming the second layer 12 to be described later. Therefore, the thickness of the first layer 11 is preferably 400 µm or less, and more preferably 300 µm or less.

### <Formation of Second Layer>

### (First coating material Immersion Step)

Thereafter, as shown in Fig. 2C, the substrate on which the first layer 11 has been formed is immersed in the first coating material. This first coating material is the same material as that used in the application step for the first time. With the first coating material immersion step, a part of the material of the matrix 10 in the first coating material enters the pores 30 in the first layer 11, and the number of the pores 30 in the first layer 11 is reduced. In addition, the second layer 12 containing the first coating material is stacked on the first layer 11.

### (First Coating Material Drying Step and Curing Step: Second Time)

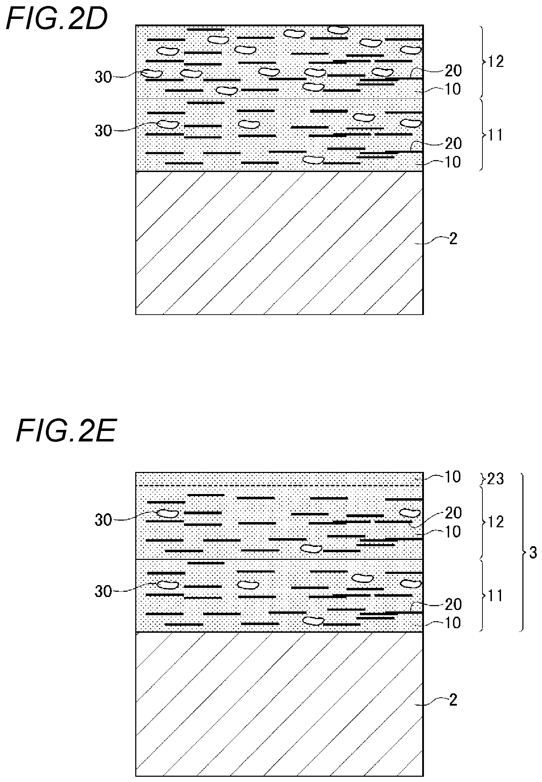

Thereafter, as shown in Fig. 2D, the second layer 12 containing the first coating material is dried at a temperature of, for example, 50°C (first coating material drying step), and then heated at a temperature of, for example, 200°C to be cured (first coating material curing step). With this step, a large number of pores 30 are formed in the second layer 12.

### <Formation of Third Layer (Surface Layer)>

### (Second coating material Immersion Step)

Thereafter, as shown in Fig. 2E, similar to the first embodiment, the substrate 2 on which the first layer 11 and the second layer 12 have been formed is immersed in the second coating material, and then dried (second coating material drying step) to be cured (second coating material curing step). This second coating material immersion step is similar to the second coating material immersion step in the first embodiment, whereby some of the pores 30 in the second layer 12 are filled with the second coating material, and the porosity of the second layer 12 is reduced. In addition, the excess second coating material remains on the surface of the second layer 12 to form the third layer 23. Accordingly, the composite member 1 including the insulating film 3 composed of the first layer 11, the second layer 12, and the third layer 23 is obtained.

### (Resin Layer Forming Step)

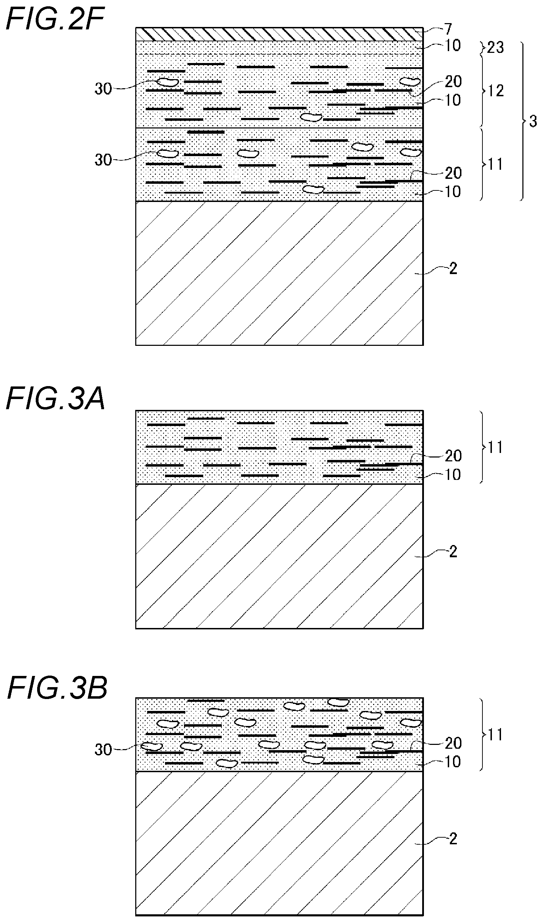

Similar to the first embodiment, in the second embodiment, a resin layer may be formed as necessary. As shown in Fig. 2F, the resin layer 7 containing, for example, an epoxy resin may be formed on the surface of the insulating film 3, whereby the composite member 1 including the insulating film 3 and the resin layer 7 on the substrate 2 is formed. In the case of forming the resin layer 7, a part of the material constituting the resin layer 7 may penetrate the first layer 11, the second layer 12, and the third layer 23.

Effects similar to those in the first embodiment can also be obtained by the method for producing a composite member according to the second embodiment. In addition, in the present embodiment, since the steps of curing the first coating material and then forming the next layer are repeated in this order, the pores 30 formed by curing are sufficiently filled with the second layer of matrix material. Therefore, it is possible to reduce the porosity (a proportion of the pores 30 in the insulating film 3), to suppress occurrence of the porosity gradient in a thickness direction of the insulating film 3, and to further improve the strength of the insulating film 3.

Note that, in the present invention, the first layer 11 and the second layer 12 after the first coating material drying step and curing step for the second time shown in Fig. 2D is performed may be used as the insulating film 3. In the case of repeating applying and curing or applying, drying, and curing of the first coating material, all of the application steps for applying the first coating material may be performed by coating or all of the application steps may be performed by immersion. However, in order to efficiently fill the pores 30 with the matrix material, it is preferable that the substrate 2 on which a plurality of layers have been formed is immersed in the first coating material at least in the final application step using the first coating material.

In addition, the first coating material drying steps for the first time and for the second time and the step of drying the second coating material do not necessarily have to be performed. For example, as shown in the second embodiment, the coating material may be dried every time the application step or the immersion step is performed, or may be dried before the final curing step. By performing the drying step before the curing step, expansion of the obtained layer in the curing step can be suppressed.

### [Third Embodiment]

Figs. 3A to 3G are schematic diagrams showing a method for producing a composite member according to the third embodiment of the present invention in order of steps. In Figs. 3A to 3G, the same components as those shown in Figs. 1A to 1E and Figs. 2A to 2F are denoted by the same reference numerals, and detailed description thereof will be omitted or simplified.

### <Formation of First Layer>

### (application step: First Time)

As shown in Fig. 3A, first, at least a part of the surface of the substrate 2 is coated with the first coating material. The first coating material is similar to that in the first embodiment, and details thereof will be described later.

### (First coating material Drying Step and Curing Step: First Time)

Next, as shown in Fig. 3B, the first coating material is dried (first coating material drying step) to be cured (first coating material curing step). With this step, the first layer 11 having a large number of pores 30 is formed.

### <Formation of Second Layer>

### (Second coating material Immersion Step: First Time)

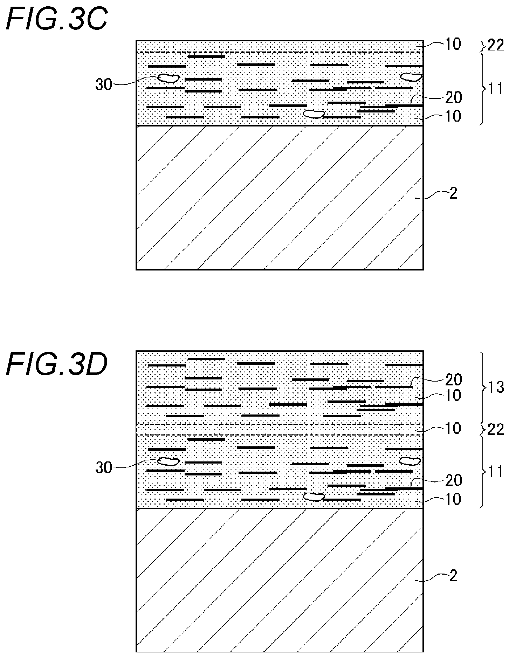

Thereafter, as shown in Fig. 3C, the substrate 2 on which the first layer 11 has been formed is immersed in the second coating material. With the second coating material immersion step, some of the large number of pores 30 formed in the first layer 11 are filled with the second coating material, and the porosity of the first layer 11 is reduced. In addition, the excess second coating material that has not been absorbed by the pores 30 remains on the surface of the first layer 11. Thereafter, the second coating material is dried at a temperature of, for example, 50°C (second coating material drying step), and heated at a temperature of, for example, 200°C to be cured (second coating material curing step). Accordingly, a second layer 22 consisting of the material of the matrix 10 containing silicone is formed on the surface of the first layer 11.

Here, a total thickness of the first layer 11 and the second layer 22 formed by performing the steps from the application step to the second coating material curing step once each is not particularly limited. However, when the total thickness of the first layer 11 and the second layer 22 is 50 µm or more, it is possible to obtain a high strength layer thicker than a layer that can be formed by coating once. Therefore, the total thickness of the first layer 11 and the second layer 22 is preferably 50 µm or more, and more preferably 100 µm or more. On the other hand, when the total thickness of the first layer 11 and the second layer 22 is 400 µm or less, in the step of forming the second layer 22, some of the pores 30 formed in the first layer 11 can be sufficiently filled with the material of the matrix 10. Therefore, the total thickness of the first layer 11 and the second layer 22 is preferably 400 µm or less, and more preferably 300 µm or less.

### <Formation of Third Layer>

### (application step: Second Time)

Thereafter, as shown in Fig. 3D, the first coating material is stacked again on the surface of the second layer 22. This first coating material is the same material as that used in the application step for the first time.

### (First Coating Material Drying Step: Second Time)

After the application step for the second time, the first coating material is dried at a temperature of 50°C, for example. With the first coating material drying step for the second time, the organic solvent in the applied first coating material in the application step for the second time is volatilized.

### (First coating material Curing Step: Second Time)

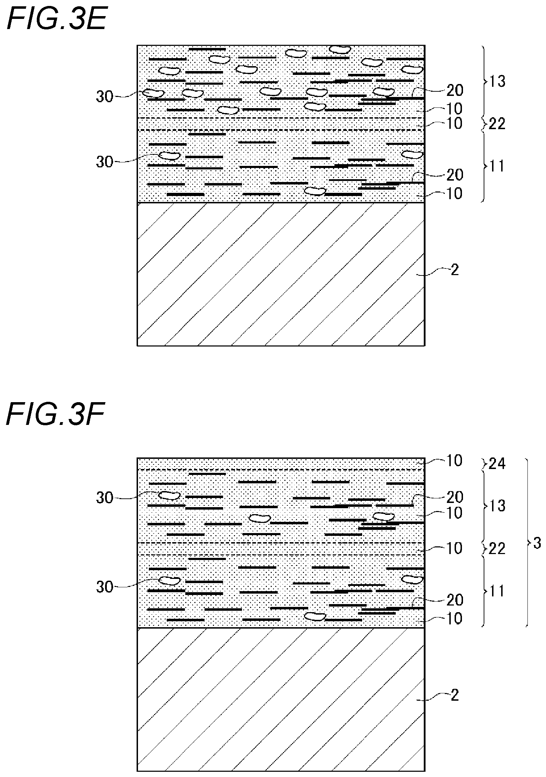

Thereafter, as shown in Fig. 3E, the dried first coating material is heated at a temperature of, for example, 200°C to be cured. With the first coating material curing step for the second time, a third layer 13 having a large number of pores 30 is formed.

### <Formation of Fourth Layer (Surface Layer)>

### (Second coating material Immersion Step: Second Time)

Thereafter, as shown in Fig. 3F, the substrate 2 on which the first layer 11 to the third layer 13 have been formed is immersed in the second coating material. The second coating material is the same material as that used in the second coating material immersion step for the first time. With the second coating material immersion step for the second time, some of the large number of pores 30 formed in the third layer 13 are filled with the second coating material, and the porosity of the third layer 13 is reduced. In addition, the second coating material that has not been absorbed by the pores 30 remains on the surface of the third layer 13. Thereafter, the second coating material is dried (second coating material drying step) and heated to be cured (second coating material curing step). Accordingly, a fourth layer 24 consisting of the material of the matrix 10 containing silicone is formed on the surface of the third layer 13.

Note that, an immersion time in the immersion step for the first time and the immersion step for the second time is not particularly limited. For example, by adjusting the immersion time to be equal to or shorter than a predetermined time, it is possible to adopt conditions that the second layer 22 and the fourth layer 24 consisting of the second coating material are not formed on the surface of the first layer 11 or the third layer 13. In addition, it is also possible to adjust the immersion time so as to form only the fourth layer 24 on the surface of the third layer 13 without forming the second layer 22 on the surface of the first layer 11. Note that, in the second coating material immersion step repeated a plurality of times, it is preferable to select the immersion conditions such that a layer consisting of the second coating material (the fourth layer 24 in Fig. 3F) is formed on the surface only in the final second coating material immersion step. In this case, the fourth layer 24 containing only the second coating material has high adhesion to the third layer 13, and has a hard and dense structure as compared with the first layer 11 and the third layer 13. Therefore, it is possible to obtain the effect of protecting the surface of the third layer 13, to suppress damage to the surface of the third layer 13, and to alleviate an impact from a collision object. In addition, since the fourth layer 24 is formed, it is possible to obtain an effect of preventing powder falling of the inorganic material 20 or the like in the third layer 13.

### (Resin Layer Forming Step)

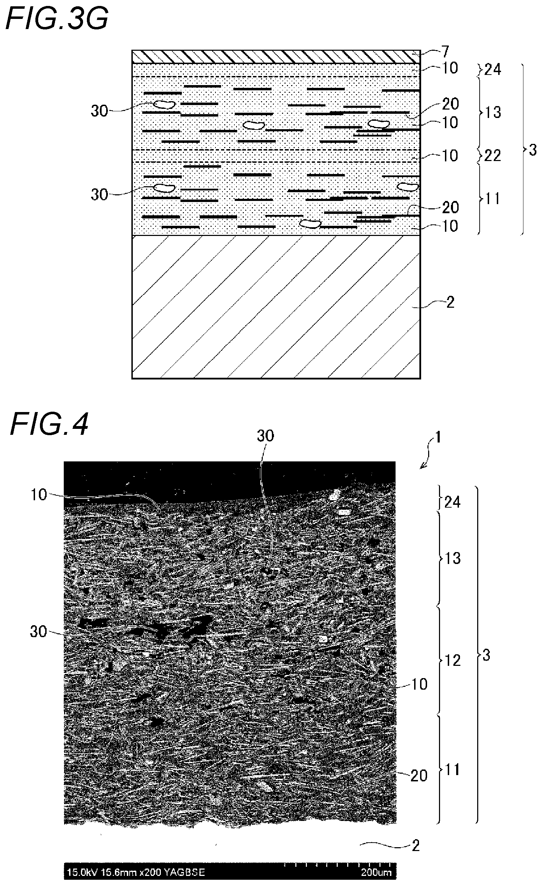

Thereafter, as shown in Fig. 3G, the resin layer 7 is formed on the fourth layer 24. In the case of forming the resin layer 7, a part of the material constituting the resin layer 7 may penetrate the layers below the resin layer 7.

Effects similar to those in the first embodiment and the second embodiment can also be obtained by the method for producing a composite member according to the third embodiment. In addition, as shown in Fig. 3F, when a layer containing the material of the matrix 10 and the inorganic material 20 and a dense layer composed of the second coating material not containing the inorganic material 20 are repeatedly stacked, a more excellent insulating property can be obtained. On the other hand, even in the case where the layer consisting of the second coating material is not formed between the layers containing the first coating material, since the method includes the immersion step in the second coating material to fill the pores 30 with the second coating material, the porosity of the entire layer can be reduced, and the insulating film 3 having a high strength and capable of maintaining the insulating property and the heat resistance can be formed.

Note that, similar to the first embodiment and the second embodiment, the drying step for each layer does not necessarily have to be performed, but by performing the drying step, it is possible to prevent the expansion of the layer in the subsequent curing step.

In the first embodiment to the third embodiment, the thickness of the obtained insulating film 3 is not particularly limited, and when the thickness is 150 µm or more, the insulating film 3 having a sufficiently excellent insulating property and heat resistance and having a high strength can be obtained. Therefore, the insulating film 3 is preferably formed to have a thickness of 150 µm or more, and the insulating film 3 is more preferably formed to have a thickness of 200 µm or more. On the other hand, when the thickness of the insulating film 3 is 800 µm or less, it is possible to prevent a decrease in strength due to an excessively large thickness of the insulating film 3, to easily control a size of the composite member, and to suppress an increase in production cost. Therefore, the insulating film 3 is preferably formed to have a thickness of 800 µm or less, and the insulating film 3 is more preferably formed to have a thickness of 600 µm or less.

In the first embodiment to the third embodiment, it is preferable to perform a blasting treatment step on the substrate before the application step of applying the first coating material to the surface of the substrate 2. A surface roughness of the substrate 2 obtained by the blasting treatment step is not particularly limited, and when a surface roughness Ra of the substrate 2 is 1 µm or more, an adhesion area between the substrate 2 and the first layer 11 increases, so that the adhesion between the substrate 2 and the first layer 11 is sufficiently obtained, and occurrence of peeling off of the insulating film 3 can be suppressed. Therefore, the blasting treatment is preferably performed such that the surface roughness Ra of the substrate is 1 µm or more, and the blasting treatment is more preferably performed such that the surface roughness Ra is 2 µm or more.

Note that, the surface roughness Ra of the substrate 2 can be measured in accordance with JIS B 0031. In the present embodiment, the surface roughness Ra represents an average value of surface roughness measured at any three points on the surface of the substrate 2.

Next, in the method for producing a composite member according to the first to third embodiments, the material constituting the insulating film 3 will be described in more detail.

### (Compound Having Siloxane Bond: Silicone)

Silicone, which is a preferred example of the compound having a siloxane bond contained in the matrix material, is heated in the coating material curing step in the production method according to the embodiment of the present invention, whereby functional groups disappear and a SiO bond is generated. In addition, when a flame or the like is generated near the composite member and the insulating film 3 is heated to a temperature of, for example, 700°C or higher, SiO₂ is generated by thermal decomposition. Then, since SiO₂ is not burned out even when subjected to a flame, the insulating film 3 containing silicone can have excellent heat resistance. Therefore, even in the case where the composite member 1 produced by the producing method according to the embodiment of the present invention is heated at a high temperature, the insulating film 3 is in close contact with the substrate 2 without peeling off, and an excellent insulating property and heat resistance can be maintained. Note that, the silicone may be either a silicone resin or a silicone rubber, and it is preferable to select a silicone resin from the viewpoint of increasing a density of SiO₂ to be formed.

### (Inorganic Material)

Since the inorganic material 20 contained in the first coating material has a high melting point and excellent heat resistance, the heat resistance of the entire insulating film 3 can be improved by containing the inorganic material 20 in the first coating material constituting the insulating film 3. In addition, in the layer containing the inorganic material 20, since the inorganic material 20 can also act as a framework, the strength of the entire insulating film 3 can be improved.

The inorganic material 20 preferably contains a silicate compound. As described above, silicone, which is an example of the compound having a siloxane bond, can be changed into SiO₂ by thermal decomposition, but since the silicate compound has the same component as SiO₂ formed by silicone, a bonding force between the matrix 10 containing silicone and the inorganic material 20 can be improved. Note that, the silicate compound preferably includes at least one kind selected from a glass-based material, mica, kaolin, talc, clay, pyrophyllite, montmorillonite, bentonite, wollastonite, xonotlite, zeolite, diatomaceous earth, and halloysite.

Note that, since a main component of silica sol (silica), which is another preferred example of the compound having a siloxane bond, is SiO₂ and the silicate compound has the same component as the silica sol (SiO₂), the bonding force between the matrix 10 containing the silica sol (silica) and the inorganic material 20 can also be improved.

In addition, the inorganic material 20 also preferably includes at least one kind selected from silica, alumina, mullite, and zirconia. Since the above material has a high melting point and a high insulating property, the heat resistance and the insulating property of the entire insulating film 3 can be further improved by containing these materials in the layer constituting the insulating film 3. Note that, in the case of applying a bus bar as an example of the composite member according to the present invention, a heat exposure temperature assumed for the bus bar is equal to or higher than a melting point of a metal material used for a general bus bar body. In the present embodiment, when silica, alumina, mullite, zirconia, or the like is contained as the inorganic material 20, since these materials have a melting point equal to or higher than the thermal exposure temperature, it is possible to suppress the bus bar body from being exposed to high heat. Therefore, the above materials are suitably used as the material of the insulating film 3 in the bus bar.

The inorganic material 20 preferably has at least one shape selected from a flaky shape, a fibrous shape, and a particulate shape. When the inorganic material 20 has the shape as described above, an adhesion force between the inorganic material 20 and the matrix 10 is increased when the inorganic material 20 is dispersed in the matrix 10, and the strength of the insulating film 3 can be improved.

In the case of containing a glass-based material as the inorganic material 20, the glass-based material is preferably at least one kind selected from a flaky glass-based material, a glass particle, and a glass fiber. Among these, the flaky glass-based material is oriented in a planar shape inside the insulating film 3 and exhibits an excellent insulating property and heat resistance. Therefore, it is particularly preferable to contain a flaky glass-based material as the glass-based material. In addition, the mica described above is particularly preferably used as the inorganic material 20 for the same reason as the flaky glass-based material.

A content of the inorganic material 20 with respect to all components in the first coating material is preferably 3 vol% to 70 vol%, more preferably 10 vol% to 50 vol%, and still more preferably 20 vol% to 40 vol%. When the content of the inorganic material 20 is less than 3 vol%, the insulating property and the heat resistance may not be sufficiently obtained. On the other hand, when it is more than 70 vol%, a viscosity of the coating liquid to be subjected to dip coating is too high and a film forming property is poor.

### (Other Materials)

Note that, in addition to the matrix 10 and the inorganic material 20 described above, the first coating material for forming the insulating film 3 may contain other materials such as a flame retardant, a dispersant, and a pigment as long as the insulating property and the heat resistance are not influenced. In addition, as described above, the first layer 11 is formed by applying the first coating material (coating liquid) to the surface of the substrate, and it is preferable to contain a thixotropic agent in order to improve a coating performance of the first coating material containing the material of the matrix 10 and the inorganic material 20.

Similar to the first coating material, the second coating material may also contain other materials such as a flame retardant, a dispersant, and a pigment as long as the insulating property and the heat resistance are not influenced.

### <Resin Layer>

In the method for producing a composite member according to the embodiment of the present invention, in the case of forming the resin layer 7 on at least a part of the surface, an insulating resin can be used as the material of the resin layer 7, and examples thereof include an epoxy resin, a nylon resin, a styrene-butadiene rubber (SBR), and a silicone rubber. When the composite member 1 includes the resin layer 7, the insulating property and the heat resistance can be further improved.

### (Thickness of Resin Layer)

In the case of forming the resin layer 7, when a thickness of the resin layer 7 is 100 µm or more, the effect of improving the insulating property and the heat resistance can be sufficiently obtained. Therefore, the thickness of the resin layer 7 is preferably 100 µm or more, more preferably 120 µm or more, and still more preferably 150 µm or more. In addition, when the thickness of the resin layer 7 is 600 µm or less, the size of the composite member 1 is not influenced, and an increase in production cost can be suppressed. Therefore, the thickness of the resin layer 7 is preferably 600 µm or less, more preferably 550 µm or less, and still more preferably 500 µm or less.

### <Substrate>

In the present embodiment, the substrate 2 is not particularly limited, and body portions of various products to which the composite member 1 according to the present embodiment is applied can be used as the substrate 2. For example, in the case of applying a bus bar to be described later as the composite member 1, a bus bar body having conductivity can be used as the substrate 2. Note that, although the bus bar body has conductivity and the substrate itself is energized, in the present embodiment, the substrate 2 covered with the insulating film 3 is not limited to a conductive one. For example, a substrate composed of a non-energized material can also be used.

### [Composite Member]

Next, a composite member obtained by the method for producing a composite member according to the present invention will be described below by way of examples. Fig. 4 is a photograph substituted for a drawing showing an example of the composite member produced in accordance with the method for producing a composite member according to the third embodiment. Note that, the composite member 1 shown in Fig. 4 is an example in which the steps from the application step to the second coating material curing step are further repeated once, and the conditions in the second coating material immersion step are adjusted such that the layer consisting of the second coating material is not formed between the layers containing the first coating material. In addition, in Fig. 4, the resin layer shown in the third embodiment is not formed.

In Fig. 4, the first layer 11, the second layer 12, and the third layer 13 each containing the material containing the material of the matrix 10 and the inorganic material 20 (first coating material) are formed on the surface of the substrate 2, and the fourth layer (surface layer) 24 consisting of the material of the matrix 10 (second coating material) is formed on the surface of the third layer 13. However, in the composite member 1 shown in Fig. 4, since a layer consisting of the second coating material is not formed between each of the first layer 11, the second layer 12, and the third layer 13, there is no boundary between the first layer 11 and the second layer 12 and between the second layer 12 and the third layer 13, and one layer of a thick film containing the material of the matrix 10 and the inorganic material 20 appears. In addition, the pores 30 are formed inside the insulating film 3, but a difference in porosity is small between a region close to the fourth layer 24 in the insulating film 3 and a region close to the substrate 2, and a variation in formation amount of the pores 30 depending on a depth position of the insulating film 3 is small. In this manner, according to the above production method, it is possible to easily form the insulating film 3 having a desired thickness and a high strength and maintaining an excellent insulating property and heat resistance.

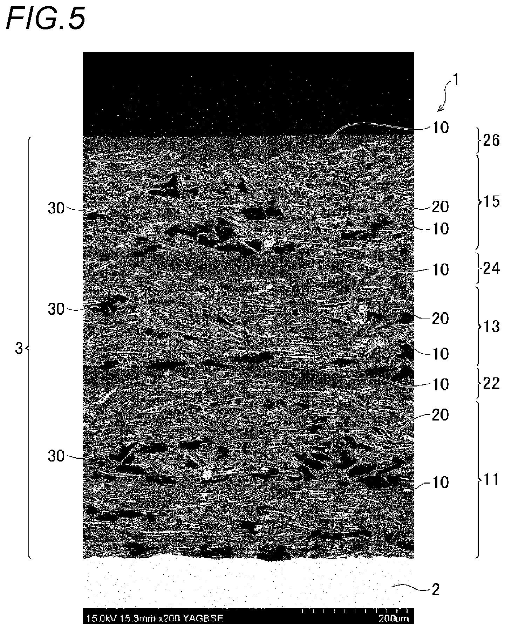

Fig. 5 is a photograph substituted for a drawing showing another example of the composite member produced in accordance with the method for producing a composite member according to the third embodiment. Note that, the composite member 1 shown in Fig. 5 is an example in which the steps from the application step to the second coating material curing step are further repeated once, and the conditions in the second coating material immersion step are adjusted such that the layer consisting of the second coating material is formed between the layers containing the first coating material. In addition, in Fig. 5, the resin layer shown in the third embodiment is not formed.

In Fig. 5, the first layer 11, the third layer 13, and a fifth layer 15 containing the first coating material, and the second layer 22, the fourth layer 24, and a sixth layer 26 consisting of the second coating material are alternately formed on the surface of the substrate 2 to form the insulating film 3 having a desired thickness. In this manner, when the second layer 22 and the fourth layer 24 having a dense structure composed of the second coating material are formed between the layers containing the first coating material, an excellent insulating property can be obtained.

The fourth layer 24 in Fig. 4 and the sixth layer 26 in Fig. 5, which are present on the surface of the insulating film 3, correspond to the third layer 23 in Figs. 1D and 2E and the fourth layer 24 in Fig. 3F, and these layers function as surface layers. These surface layers do not contain the inorganic material 20 and consists of the material of the matrix 10. Therefore, these surface layers can have high adhesion to the layers present thereunder. In addition, since the fourth layer 24 in Fig. 4 and the sixth layer 26 in Fig. 5, which are formed as surface layers, are hard and dense layers, when the surface layer is present on at least a part of the surface of the insulating film 3, it is possible to suppress damage to the surface of the composite member 1 and to alleviate an impact from a collision object. In addition, since the surface layer is present on the surface of the insulating film 3, an effect of preventing the inorganic material 20 or the like from falling off can be obtained.

### (Thickness of Surface Layer)

When a thickness of the surface layer present on the surface of the insulating film 3 is 10 µm or more, the effect of protecting the composite member 1 and the effect of preventing the inorganic material 20 or the like from falling off can be obtained. Therefore, the thickness of the surface layer is preferably 10 µm or more. In addition, when the thickness of the surface layer is 100 µm or less, the occurrence of peeling off can be suppressed. Therefore, the thickness of the surface layer is preferably 100 µm or less. Note that, in Fig. 5, the second layer 22 and the fourth layer 24 containing the same material as the surface layer are present, and preferred thicknesses of these layers are the same as those of the surface layer.

### [Specific Application Example of Composite Member]

A product to which the composite member 1 is applied is not particularly limited, and the composite member 1 can be applied to, for example, a bus bar used for connecting a plurality of battery cells or battery modules in a power storage device. Hereinafter, the bus bar will be described.

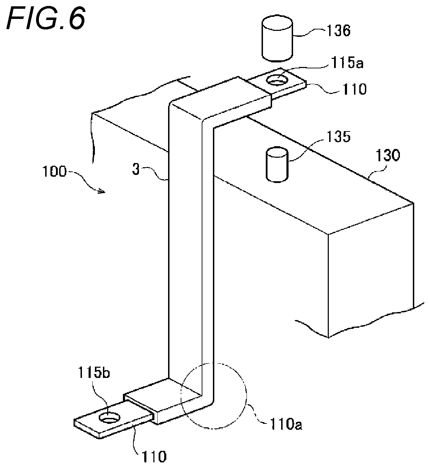

Fig. 6 is a perspective view showing a bus bar produced by the method for producing a composite member according to the embodiment of the present invention. Note that, Fig. 6 shows a state immediately before a bus bar (composite member) 100 is attached to a battery cell 130. A bus bar body (substrate) 110 is, for example, a metal plate member having a Z shape as a whole, and is fixed by inserting an electrode 135 of the battery cell 130 into a connection hole 115a at one tip and covering the electrode 135 with a terminal cap 136. Adjacent battery cells (not shown) or external devices (not shown) are connected to a connection hole 115b at the other tip of the bus bar body 110. A region of the bus bar body 110 excluding the connection holes 115a and 115b is covered with the insulating film 3. In this manner, the bus bar 100 is formed.

Note that, although not shown, the bus bar body 110 may have various shapes depending on an installation location of the battery cell 130, such as an I-shape as a whole or an irregular shape having a curved portion.

When the bus bar body 110 has a shape having a bent portion 110a or a curved portion (not shown) such as a Z shape shown in the drawing, the following problems occur. For example, in the method of winding the ceramic tape around the body as in the bus bar disclosed in Patent Literature 1, it takes time and effort to perform the winding operation in order to prevent winding unevenness or a gap from occurring in the bent portion 110a or the curved portion. It is also assumed that a gap is generated between the ceramic tapes due to vibration or the like, or an adhesive between the ceramic tape and the body is peeled off.

In contrast, as described above, when the bus bar 100 is produced by the method for producing a composite member according to the present invention, the insulating film 3 having an insulating property, heat resistance, and a high strength can be formed on a surface of the bus bar body 110 without winding a tape around the bus bar body 110. In addition, since the operation of winding the tape around the bus bar body 110 is not required, there is no problems with winding unevenness, a gap, or peeling off, and it is possible to easily cope with a complicated shape.

Note that, as a method of applying the first coating material to the surface of the bus bar body 110, "dip coating" in which the bus bar body 110 is immersed in a coating liquid or coating using a brush or a spray can be used. In the case of using dip coating, since the insulating film 3 is not formed in the connection hole 115a and the connection hole 115b, this region is masked and then the bus bar body 110 is immersed in the coating liquid. Similarly, in the other application step and the immersion step, it is preferable to mask the region where the insulating film 3 is not to be formed, and to then apply a predetermined coating material to the bus bar body 110. By repeating such a step a plurality of times, the insulating film 3 covering at least a part of the surface of the bus bar body 110 can be formed.

In addition to the bus bar, the composite member according to the present embodiment can be applied to a connector, a protective component for a battery module, a case of an electronic component, a battery cell, a battery module, a battery pack, or a coil of a motor.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-170684) filed on September 29, 2023, and the contents thereof are incorporated herein by reference.

### REFERENCE SIGNS LIST

1 composite member
2 substrate
3 insulating film
7 resin layer
10 matrix
11 first layer
12, 22 second layer
13, 23 third layer
15 fifth layer
20 inorganic material
24 fourth layer
26 sixth layer
30 pore
100 bus bar
110 bus bar body
110a bent portion
130 battery cell
135 electrode

## Claims

1. A method for producing a composite member including a substrate and an insulating film covering at least a part of a surface of the substrate, the method comprising:
an application step of applying a first coating material containing an inorganic material and a matrix material containing a compound having a siloxane bond to at least the part of the surface of the substrate; and
a first coating material curing step of curing the first coating material, wherein
at least the application step is repeated a plurality of times.

2. The method for producing a composite member according to claim 1, wherein the application step and the first coating material curing step are repeated a plurality of times in this order.

3. The method for producing a composite member according to claim 2, wherein the first coating material is applied to the substrate by immersing the substrate in the first coating material in at least the final application step among the application step and the first coating material curing step repeated the plurality of times.

4. The method for producing a composite member according to claim 2, further comprising:
after the first coating material curing step, a second coating material immersion step of immersing the substrate on which a film of the first coating material has been formed in a second coating material consisting of a matrix material containing a compound having a siloxane bond; and
a second coating material curing step of curing the second coating material.

5. The method for producing a composite member according to claim 4, further comprising:
a second coating material drying step of drying the second coating material between the second coating material immersion step and the second coating material curing step.

6. The method for producing a composite member according to claim 1, further comprising:
a first coating material drying step of drying the first coating material after the application step, wherein
the application step and the first coating material drying step are repeated a plurality of times in this order before the first coating material curing step.

7. The method for producing a composite member according to claim 2, further comprising:
a first coating material drying step of drying the first coating material between the application step and the first coating material curing step, wherein
the application step, the first coating material drying step, and the first coating material curing step are repeated a plurality of times in this order.

8. The method for producing a composite member according to claim 7, wherein a thickness of a layer formed by performing the application step, the first coating material drying step, and the first coating material curing step once each is 50 µm or more and 400 µm or less.

9. The method for producing a composite member according to claim 2, further comprising:
after the first coating material curing step, an immersion step of immersing the substrate on which a film of the first coating material has been formed in a second coating material consisting of a matrix material containing a compound having a siloxane bond, and a second coating material curing step of curing the second coating material, wherein
the application step, the first coating material curing step, the immersion step, and the second coating material curing step are repeated a plurality of times in this order.

10. The method for producing a composite member according to claim 9, further comprising:
a first coating material drying step of drying the first coating material between the application step and the first coating material curing step; and
a second coating material drying step of drying the second coating material between the immersion step and the second coating material curing step.

11. The method for producing a composite member according to claim 10, wherein a thickness of a layer formed by performing the steps from the application step to the second coating material curing step once each is 50 µm or more and 400 µm or less.

12. The method for producing a composite member according to any one of claims 1 to 11, wherein the insulating film is formed to have a thickness of 150 µm or more and 800 µm or less.

13. The method for producing a composite member according to any one of claims 1 to 11, further comprising:
a resin layer forming step of forming a resin layer by applying a resin material containing a resin different from the matrix material to at least a part of a surface and curing the resin material.

14. The method for producing a composite member according to any one of claims 1 to 11, further comprising:
before the application step, a blasting treatment step of subjecting the substrate to a blasting treatment such that a surface roughness Ra is 1 µm or more.

15. The method for producing a composite member according to any one of claims 1 to 3 and 6 to 8, wherein the compound having a siloxane bond contained in the first coating material is at least one of silicone and silica sol.

16. The method for producing a composite member according to any one of claims 4, 5, and 9 to 11, wherein the compound having a siloxane bond contained in each of the first coating material and the second coating material is at least one of silicone and silica sol.

17. The method for producing a composite member according to any one of claims 1 to 11, wherein the inorganic material includes at least one kind selected from silica, alumina, mullite, and zirconia.

18. The method for producing a composite member according to any one of claims 1 to 11, wherein the inorganic material includes at least one kind selected from a glass-based material, mica, kaolin, talc, clay, pyrophyllite, montmorillonite, bentonite, wollastonite, xonotlite, zeolite, diatomaceous earth, and halloysite.

19. The method for producing a composite member according to any one of claims 1 to 11, wherein the inorganic material includes at least one kind selected from a flaky inorganic material, a fibrous inorganic material, and a particulate inorganic material.

20. The method for producing a composite member according to any one of claims 1 to 11, wherein the inorganic material includes at least one of a flaky glass-based material and mica.

21. The method for producing a composite member according to any one of claims 1 to 11, wherein the composite member is applied to a bus bar that connects a plurality of battery cells or battery modules.

22. The method for producing a composite member according to any one of claims 1 to 11, wherein the composite member is applied to a connector, a protective component for a battery module, a case of an electronic component, a battery cell, a battery module, a battery pack, or a coil of a motor.
